(19) Europäisches Patentamt / European Patent Office / Office européen des brevets

(11) **EP 3 655 724 B1**

(12) **FASCICULE DE BREVET EUROPEEN**

(45) Date de publication et mention de la délivrance du brevet:
**05.05.2021 Bulletin 2021/18**

(21) Numéro de dépôt: **18752592.8**

(22) Date de dépôt: **19.07.2018**

(51) Int Cl.:
*G01C 21/08* *(2006.01)*    *G01C 21/00* *(2006.01)*

(86) Numéro de dépôt international:
**PCT/FR2018/051837**

(87) Numéro de publication internationale:
**WO 2019/016474 (24.01.2019 Gazette 2019/04)**

(54) **PROCÉDÉ D'ESTIMATION DU MOUVEMENT D'UN OBJET ÉVOLUANT DANS UN CHAMP MAGNÉTIQUE**

VERFAHREN ZUR SCHÄTZUNG DER BEWEGUNG EINES SICH IN EINEM MAGNETFELD BEWEGENDEN OBJEKTS

METHOD FOR ESTIMATING THE MOVEMENT OF AN OBJECT MOVING IN A MAGNETIC FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2017 FR 1756958**

(43) Date de publication de la demande:
**27.05.2020 Bulletin 2020/22**

(73) Titulaire: **SYSNAV**
**27200 Vernon (FR)**

(72) Inventeurs:
- **VISSIERE, David**
  **75009 Paris (FR)**
- **CHESNEAU, Charles-Ivan**
  **75008 Paris (FR)**
- **HILLION, Mathieu**
  **27200 Vernon (FR)**
- **PRIEUR, Christophe**
  **38320 Eybens (FR)**

(74) Mandataire: **Regimbeau**
**20, rue de Chazelles**
**75847 Paris Cedex 17 (FR)**

(56) Documents cités:
**EP-A1- 2 541 199    US-A1- 2013 218 451**

- **NICOLAS PRALY ET AL: "Using distributed magnetometry in navigation of heavy launchers and space vehicles", 4TH EUROPEAN CONFERENCE FOR AEROSPACE SCIENCES (EUCASS), 30 août 2011 (2011-08-30), XP055019418,**
- **ERIC DORVEAUX ET AL: "Combining inertial measurements and distributed magnetometry for motion estimation", 2011 AMERICAN CONTROL CONFERENCE (ACC 2011) : SAN FRANCISCO, CALIFORNIA, USA, 29 JUNE - 1 JULY 2011, IEEE, PISCATAWAY, NJ, 29 juin 2011 (2011-06-29), pages 4249-4256, XP032034719, ISBN: 978-1-4577-0080-4**
- **Eric Dorveaux ET AL: "Magneto-inertial navigation: principles and application to an indoor pedometer", , 10 novembre 2011 (2011-11-10), XP055480028, Extrait de l'Internet: URL:https://pastel.archives-ouvertes.fr/pastel-00677137/document [extrait le 2018-05-31]**

**Description**

DOMAINE TECHNIQUE GENERAL

La présente invention concerne le domaine de la navigation sans GPS.

Plus précisément, elle concerne un procédé d'estimation du mouvement d'un objet par des techniques magnéto-inertielles.

ETAT DE L'ART

Les techniques dites de navigation magnéto-inertielles permettent d'estimer précisément la vitesse (et de là la position par intégration) d'un solide dans un lieu où le champ magnétique est perturbé.

Précisément, il a été proposé dans le brevet FR2914739 d'utiliser, en complément des équations déjà utilisées en techniques inertielles classiques, l'équation $\dot{B} = -\Omega \wedge B + \nabla B.\ V$ pour estimer le vecteur vitesse (linéaire) $V$, à partir du vecteur vitesse angulaire $\Omega$ (généralement mesuré par des gyromètres de la centrale inertielle), des mesures de champ magnétique $B$ et de ses dérivées par rapport au temps $\dot{B}$ et de ses dérivées spatiales $\nabla B$ (gradient), mesurées ou estimées.

Grâce à cette information sur la vitesse du solide, l'erreur sur l'estimation de position sera dans le pire des cas proportionnelle au temps, contrairement aux techniques inertielles classiques où elle est quadratique en temps.

Ces techniques magnéto-inertielles apportent ainsi entière satisfaction, et requièrent des capteurs inertiels de moindre performance que les méthodes inertielles classiques (basées sur l'intégration au travers d'un filtre de Kalman ou d'un autre observateur d'informations en provenance de gyromètres et d'accéléromètres embarqués sur le solide dont on souhaite estimer la position et la vitesse : typiquement, les gyromètres « maintiennent » un repère, dans lequel une double intégration temporelle des mesures des accéléromètres permet d'estimer le mouvement) et donc moins encombrants.

Ainsi, au moins une centrale inertielle est couplée à un ou plusieurs magnétomètres répartis spatialement (typiquement magnétomètres disposés sur les sommets d'un trièdre direct) et solidaire de la centrale inertielle (typiquement placée à l'origine du trièdre). Les données issues de ces capteurs sont transmises à une carte électronique d'acquisition et de calcul qui délivre à l'utilisateur l'information de position et de vitesse par résolution de l'équation susmentionnée. L'utilisation de plusieurs magnétomètres permet de mesurer directement les gradients de champ magnétique par exemple par différence finie (développement de Taylor), au lieu de les estimer.

Cependant, l'équation $\dot{B} = -\Omega \wedge B + \nabla B.\ V$ n'est vraiment valide que dans l'hypothèse d'un champ magnétique ambiant stationnaire. Plus précisément, elle présente en réalité un terme supplémentaire $\dfrac{\partial B}{\partial t}$, nul lorsque le champ est stationnaire.

Ce n'est par exemple pas le cas lorsqu'un objet métallique se déplace à proximité. En présence d'une telle perturbation magnétique (le champ magnétique devient non stationnaire), le modèle du comportement magnétique supposant que $\dfrac{\partial B}{\partial t} = 0$ devient faux et les informations de positionnement calculées par le filtre deviennent entachées d'erreurs.

Pour résoudre cette difficulté, il a été proposé de poursuivre l'effort de modélisation pour inclure les perturbations magnétiques dans le modèle, c'est-à-dire l'ensemble des équations considérées.

En particulier, il a été présenté dans le document « Navigation Magnéto-Inertielle - Principes et application à un système podométrique indoor », Éric DORVEAUX, thèse du 10 novembre 2011 à l'Ecole Nationale Supérieure des Mines de Paris, l'idée d'utiliser l'équation de Maxwell-Faraday pour modéliser toutes ces perturbations magnétiques par le rotationnel du champ électrique. Le lien entre la dynamique du champ magnétique et le rotationnel de champ électrique E modifie alors l'équation du comportement du champ magnétique en $\dot{B} = -\Omega \wedge B + \nabla \beta.\ V - \overrightarrow{rot}E$

L'équation précédente est vraie en toutes circonstances, mais présente l'inconvénient de nécessiter des capteurs permettant de mesurer le champ électrique.

Alternativement, il a été proposé de modéliser une partie seulement des perturbations magnétiques. C'est le cas de la modélisation des perturbations magnétiques liées au réseau de distribution d'électricité (voir document « Motion estimation of a rigid body with an EKF using magneto-inertial measurements », Charles-Ivan Chesneau, Indoor Positioning and Indoor Navigation (IPIN), 2016 International Conférence on Indoor Positioning and Indoor Navigation). On rappelle en effet que le courant qui circule dans toutes les lignes électriques oscille à une fréquence de 50 Hz. C'est également le cas de la modélisation de petites perturbations magnétiques sous la forme de dipôles magnétiques selon une méthode présentée dans « Compensation Method of Small Magnetic Perturbation in Heading by Gradient Measurement in a Magnetic Compass », Jouy et al., Accepted to appear in European Magnetic Sensors and ActuatorsConference 2017

Enfin, il est connu du document US 2013/218451 A1 un procédé d'estimation des coordonnées d'une position courante basée sur la variabilité dans le temps de l'intensité du champ magnétique terrestre, détectée sous forme de signature locale détectée par un capteur géomagnétique et comparée aux signatures locales présentes d'une base de données.

De telles techniques de modélisation d'une partie connue des perturbations apportent satisfaction, mais ne sont efficaces que contre un certain nombre de perturbations prédéfinies. Elles ne permettent pas de prendre en compte les perturbations inattendues par exemple liées au déplacement d'objets métalliques de formes diverses.

Il serait souhaitable de disposer d'une nouvelle méthode de navigation magnéto-inertielle par mesure du gradient du champ magnétique qui puisse traiter de façon universelle et efficace toutes les perturbations magnétiques, et ne nécessitant pas de capteurs additionnels.

PRESENTATION DE L'INVENTION

La présente invention se rapporte ainsi selon un premier aspect à un procédé d'estimation du mouvement d'un objet évoluant dans un champ magnétique ambiant, le procédé étant caractérisé en ce qu'il comprend des étapes de :

(a) Acquisition :

∘ par des moyens de mesure magnétique solidaires dudit objet, d'au moins une composante du champ magnétique et/ou d'une dérivée i-ième du champ magnétique, au niveau des moyens de mesure magnétique ;
∘ par des moyens de mesure autre que magnétique solidaires dudit objet, d'au moins une information représentative du mouvement de l'objet ;

(b) Evaluation par des moyens de traitement de données du caractère stationnaire ou non du champ magnétique au niveau des moyens de mesure magnétique ;
(c) Estimation par les moyens de traitement de données d'au moins une composante du mouvement dudit objet en utilisant,

∘ au moins une équation autre que magnétique liant ladite composante du mouvement dudit objet et l'au moins une information acquise représentative du mouvement de l'objet ;
∘ selon le résultat de ladite évaluation du caractère stationnaire ou non du champ magnétique au niveau des moyens de mesure magnétique, au moins une équation magnétique liant ladite composante du mouvement dudit objet et l'au moins une composante acquise du champ magnétique et/ou d'une dérivée i-ième du champ magnétique.

Selon d'autres caractéristiques avantageuses et non limitatives :

- les moyens de mesure magnétique comprennent une pluralité de gradiomètres et/ou magnétomètres organisés en triaxes, chaque triaxe étant associé à une position spatiale ;

- la ou les équations magnétiques sont de la forme $\dot{\nabla_n}B = f_n(\Omega).\nabla_n B + g_n(\nabla_{n+1}B).V$, où $\nabla_n B$ est une dérivée n-ième du champ magnétique, $\Omega$ la vitesse angulaire instantanée, $V$ la vitesse linéaire instantanée, et $f_n$ et $g_n$ des fonctions prédéterminées ;

- l'équation magnétique est $\dot{B} = -\Omega \times B + \nabla B \cdot V$ ;

- lesdits moyens de mesure autre que magnétique sont des moyens de mesure inertielle, de sorte que ladite information acquise représentative du mouvement de l'objet est au moins une composante d'une accélération et/ou d'une vitesse angulaire de l'objet ;

- ladite au moins une équation autre que magnétique est une équation inertielle liant ladite composante du mouvement dudit objet et l'au moins une composante acquise d'une accélération et/ou d'une vitesse angulaire de l'objet ;

- l'étape (a) comprend l'acquisition par les moyens de mesure inertielle de trois composantes de l'accélération de l'objet et trois composantes de la vitesse angulaire de l'objet ;

- l'étape (b) comprend le calcul d'un paramètre représentatif du caractère stationnaire ou non du champ magnétique au niveau des moyens de mesure magnétique, la contribution de l'au moins une équation magnétique dans l'étape (c) étant fonction dudit paramètre représentatif du caractère stationnaire ou non du champ magnétique au niveau des moyens de mesure magnétique ;

- l'étape (b) comprend le calcul de l'innovation d'un observateur d'état, ledit paramètre représentatif du caractère stationnaire ou non du champ magnétique au niveau des moyens de mesure magnétique étant fonction de ladite innovation ;
- ledit paramètre représentatif du caractère stationnaire ou non du champ magnétique au niveau des moyens de mesure magnétique est la différence entre la trace de la matrice théorique de la covariance de l'innovation, et la trace de la matrice estimée de la covariance de l'innovation ;
- l'étape (c) comprend la mise en œuvre d'un observateur d'état pour estimer un état comprenant ladite au moins une composante du mouvement dudit objet, la contribution de ladite au moins une équation magnétique étant contrôlée via un gain dudit observateur d'état ;
- l'observateur d'état mis en œuvre à l'étape (c) est l'observateur d'état utilisé à l'étape (b).

Selon un deuxième aspect, l'invention concerne un équipement d'estimation du mouvement d'un objet évoluant dans un champ magnétique ambiant, caractérisé en ce qu'il comprend des moyens de traitement de données configurés pour mettre en œuvre :

- Un module de réception :

  ◦ d'au moins une composante du champ magnétique et/ou d'une dérivée i-ième du champ magnétique, acquise par des moyens de mesure magnétique solidaires dudit objet,
  ◦ d'au moins une composante d'une information représentative du mouvement de l'objet, acquise par des moyens de mesure autre que magnétique solidaires dudit objet,

- un module d'évaluation du caractère stationnaire ou non du champ magnétique au niveau des moyens de mesure magnétique ;
- un module d'estimation d'au moins une composante du mouvement dudit objet en utilisant,

  ◦ au moins une équation autre que magnétique liant ladite composante du mouvement dudit objet et l'au moins une information acquise représentative du mouvement de l'objet ;
  ◦ selon le résultat de ladite évaluation du caractère stationnaire ou non du champ magnétique au niveau des moyens de mesure magnétique, au moins une équation magnétique liant ladite composante du mouvement dudit objet et l'au moins une composante acquise du champ magnétique et/ou d'une dérivée i-ième du champ magnétique.

Selon d'autres caractéristiques avantageuses et non limitatives :

- L'équipement est un boitier comprenant les moyens de mesure magnétique et les moyens de mesure autre que magnétique ;
- L'équipement est un terminal mobile ou un serveur, adapté pour communiquer avec un boitier comprenant les moyens de mesure magnétique et les moyens de mesure autre que magnétique.

Selon un troisième aspect, l'invention concerne un système comprenant l'équipement selon le deuxième aspect de l'invention et au moins un boitier en connexion.

Selon un quatrième et un cinquième aspect, l'invention concerne un produit programme d'ordinateur comprenant des instructions de code pour l'exécution d'un procédé d'estimation du mouvement d'un objet évoluant dans un champ magnétique ambiant selon le premier aspect de l'invention ; et un moyen de stockage lisible par un équipement informatique sur lequel un produit programme d'ordinateur comprend des instructions de code pour l'exécution d'un procédé d'estimation du mouvement d'un objet évoluant dans un champ magnétique ambiant selon le premier aspect de l'invention.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma d'équipements pour la mise en œuvre du procédé selon l'invention ;
- La figure 2 représente plus en détail un exemple de boitier pour la mise en œuvre du procédé selon l'invention ;
- Les figures 3a et 3b représentent divers observateur d'états utilisés dans des modes de réalisation du procédé selon l'invention.

DESCRIPTION DETAILLEE

*Principe*

Le présent procédé propose, plutôt que de combiner les deux types de modèles (inertiel et magnétique) en un seul modèle, d'utiliser des techniques de filtrage adaptatif permettant de modifier l'impact de l'équation magnétique dans le modèle de filtrage global. Plus précisément, on garde l'équation magnétique « simplifiée » $\dot{B} = -\Omega \wedge B + \nabla B . V$ (ou tout autre dérivée de cette équation, de la forme $\dot{\nabla_{\mathrm{n}}B} = f_n(\Omega).\nabla_{\mathrm{n}}B + g_n(\nabla_{\mathrm{n+1}}B).V,$ où $\nabla_n B$ est une dérivée n-ième du champ magnétique, et $f_n$ et $g_n$ des fonctions prédéterminées, voir la demande FR1756675) mais on limite voire supprime son impact en cas de perturbation.

On utilise pour cela comme l'on verra un critère permettant de :

- détecter que le système est en présence d'une perturbation magnétique et ainsi réduire l'impact de la ou les équations magnétiques dans le modèle, et
- détecter la fin de la perturbation magnétique et ainsi ré-augmenter l'impact de la ou les équations magnétiques.

*Architecture*

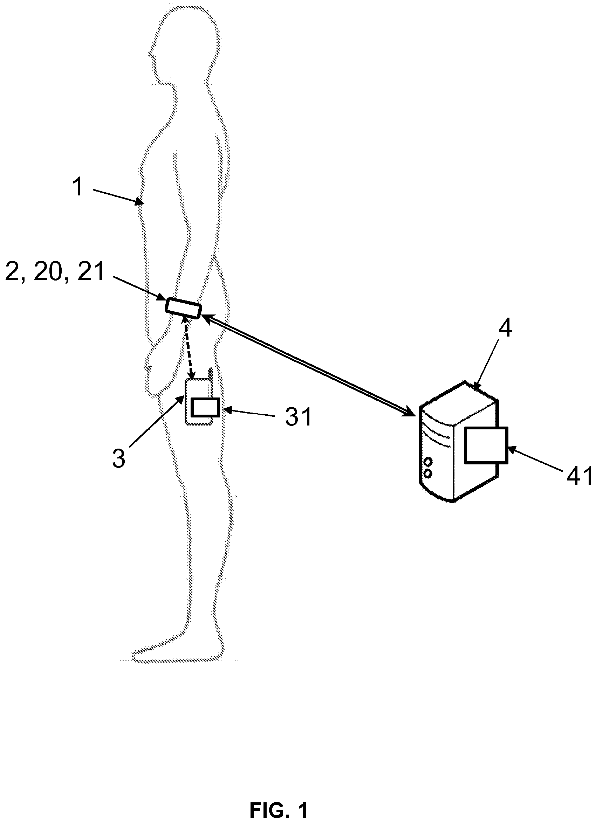

En référence à la **figure 1**, le présent procédé permet l'estimation du mouvement d'un objet 1 évoluant dans un champ magnétique ambiant (typiquement le champ magnétique terrestre, le cas échéant légèrement altéré par les objets métalliques à proximité), noté $\vec{B}$. Comme déjà expliqué, le champ magnétique est un champ vectoriel en l'espèce tridimensionnel, c'est-à-dire associant un vecteur de dimension trois à chaque point de tridimensionnel dans lequel l'objet est mobile.

Cet objet 1 peut être n'importe quel objet mobile dont la connaissance de la position est souhaitée, par exemple un véhicule à roues, un drone, etc., mais également une personne ou une partie du corps de cette personne (ses mains, sa tête, etc.).

L'objet 1 est équipé de moyens de mesure magnétique 20, qui sont des magnétomètres et/ou des gradiomètres. Plus précisément, au lieu de mesurer la valeur des composantes du champ magnétique $\vec{B}$ ces derniers mesurèrent directement la valeur des composantes du gradient du champ magnétique $\vec{B}$, i.e. la valeur des dérivées spatiales. De tels gradiomètres magnétiques 20 sont connus de l'homme du métier. Selon certains modes de réalisation de l'invention, on pourra utiliser des gradiomètres mesurant directement la valeur des dérivées secondes (gradient d'ordre deux), et de façon générale des dérivées i-ièmes (gradient d'ordre *i*).

Dans la suite de la description on prendra l'exemple de magnétomètres mais l'homme du métier saura transposer à des gradiomètres.

Le ou les magnétomètres 20 sont « axiaux », c'est à dire capables de mesurer une composante dudit champ magnétique, i.e. la projection dudit vecteur champ magnétique $\vec{B}$ selon leur axe (ou en cas de gradiomètre une composante d'une dérivée spatiale d'ordre *i* dudit champ magnétique, i.e. la variation d'une composante de $\vec{\nabla}^{i-1}B$ au niveau dudit gradiomètre selon leur axe).

Avantageusement les magnétomètres 20 sont au moins au nombre de 3n+3, avantageusement organisé par groupes de trois en « triaxes », i.e. un triplet de magnétomètres 20 deux à deux orthogonaux associés à la même position spatiale et mesurant le champ magnétique selon les trois axes.

De façon préférée, le repère orthonormé associé à l'objet est choisi par convention (et par facilité pour la suite de la présente description) tel que les triaxes sont avantageusement orientés conformément audit repère orthonormé, de sorte à faciliter encore les calculs.

Mais l'homme du métier saura dans tous les cas transposer à n'importe quelle disposition spatiale de gradiomètres/magnétomètres.

L'objet 1 est également équipé de moyens de mesure autre que magnétique 24, en particulier des moyens de mesure inertielle, même si on pourra utiliser d'autres types de capteurs tels qu'une caméra, éventuellement en combinaison. Dans la suite de la description on considèrera le mode de réalisation préféré avec des moyens de mesure inertielle.

De tels moyens sont largement connus de l'homme du métier et constituent typiquement une centrale à inertie comprenant au moins un accéléromètre et/ou un gyromètre, de façon préférée trois accéléromètres et trois gyromètres, également disposés en triaxe. Les gyromètres mesurent la vitesse angulaire instantanée de la centrale inertielle par rapport au référentiel terrestre, notée $\vec{\Omega}$. Les accéléromètres sont sensibles aux forces extérieures autres que gravitationnelles appliquées sur le capteur, et permettent de mesurer une accélération notée $\vec{\gamma}$.

Les moyens de mesure magnétique et non-magnétique (inertielle) 20, 24 sont solidaires de l'objet 1, i.e. ils présentent un mouvement sensiblement identique dans le référentiel terrestre. De façon préférée, le référentiel de l'objet 1 est muni d'un repère cartésien orthonormé dans lequel les coordonnées sont notées $(x_1, x_2, x_3)$, les magnétomètres 20 présentent ainsi une position prédéterminée dans ce repère.

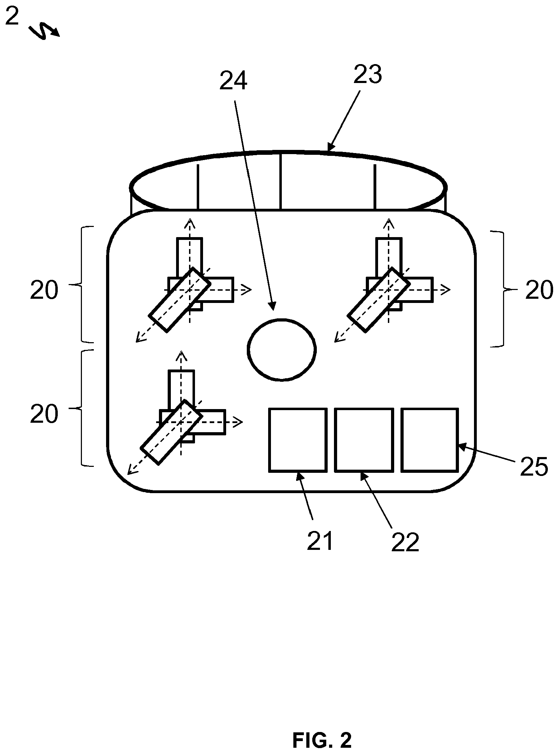

Les moyens de mesure magnétique et non-magnétique (inertielle) 20, 24 sont préférentiellement ceux d'un boitier 2 tel que représenté sur la **figure 2** présentant (par exemple si l'objet 1 est une personne) des moyens 23 d'attache à l'objet 1 (par exemple le poignet ou la main). Ces moyens d'attache 23 consistent par exemple en un bracelet par exemple à bande auto-agrippante qui enserre le membre et permet la liaison solidaire. On comprendra bien que l'invention n'est pas limitée à l'estimation du mouvement d'une personne, mais elle est particulièrement avantageuse dans une telle utilisation car elle permet un encombrement très réduit, ce qui est nécessaire pour que le boitier soit portable par un humain de façon ergonomique.

Le boitier 2 peut comprendre des moyens de traitement 21 (typiquement un processeur) pour la mise en œuvre directement en temps réel des traitements du présent procédé, ou bien les mesures peuvent être émises via des moyens de communication 25 vers un dispositif externe tel qu'un terminal mobile (smartphone) 3, voire un serveur distant 4, ou encore les mesures peuvent être enregistrées dans des moyens de stockage de données 22 locaux (une mémoire par exemple de type flash) mémoire locale pour un traitement a posteriori par exemple sur le serveur 4.

Les moyens de communication 25 peuvent mettre en œuvre une communication sans fil à courte portée par exemple Bluetooth ou Wifi (en particulier dans un mode de réalisation avec un terminal mobile 3) voire être des moyens de connexion à un réseau mobile (typiquement UMTS/LTE) pour une communication à longue distance. Il est à noter que les moyens de communication 25 peuvent être par exemple une connectique filaire (typiquement USB) pour transférer les données des moyens de stockage de données 22 locaux à ceux d'un terminal mobile 3 ou d'un serveur 4.

Si c'est un terminal mobile 3 (respectivement un serveur 4) qui héberge « l'intelligence », il comprend des moyens de traitement 31 (respectivement 41) tels qu'un processeur pour la mise en œuvre des traitements du présent procédé qui vont être décrits. Lorsque les moyens de traitement utilisés sont ceux 21 du boitier 2, celui-ci peut encore inclure des moyens de communication 25 pour transmettre la position estimée. Par exemple la position du porteur peut être envoyée au terminal mobile 3 pour afficher la position dans une interface d'un logiciel de navigation.

Dans la suite de la présente description, on verra que les moyens de traitement de données 21, 31, 41 respectivement du boitier 2, d'un smartphone 3 et d'un serveur distant 4 peuvent indifféremment et selon les applications réaliser tout ou partie des étapes du procédé.

*Procédé*

Dans une première étape (a), le procédé comprend l'acquisition (en particulier dans un référentiel de l'objet 1) de deux types de données :

- par les moyens de mesure magnétique 20 (le ou les gradiomètres/magnétomètres) solidaires dudit objet 1, d'une composante :

  ◦ du champ magnétique et/ou
  ◦ d'au moins une dérivée i-ième dudit champ magnétique $\vec{B}$, avec une ou plusieurs valeurs $i > 1$ (comme expliqué, divers gradiomètres/magnétomètres peuvent être utilisés de sorte à mesurer divers ordres des dérivées ou directement les valeurs du champ magnétique).

- par les moyens de mesure autre que magnétique (24) solidaires dudit objet 1 :

  ◦ d'au moins une information représentative du mouvement de l'objet. On comprendra que cette information peut être de nombreux types : données inertielles, images, informations de profondeur, etc.

En particulier, dans le cas préféré inertiel on a l'acquisition :

- par les moyens de mesure inertielle 24 solidaires dudit objet 1, d'au moins une composante :

  ◦ de l'accélération et/ou
  ◦ de la vitesse angulaire de l'objet 1 (préférentiellement trois composantes de la vitesse angulaire, et trois composantes de l'accélération).

Ces grandeurs sont avantageusement mesurées avec un échantillonnage dt (i.e. toutes les « dt » secondes) avec dt très petit devant le temps caractéristique des mouvements de l'objet 1, typiquement 40 ms.

Dans une étape (b), les moyens de traitement de données 21, 31, 41 évaluent le caractère stationnaire ou non du champ magnétique au niveau des moyens de mesure magnétique 20. Comme expliqué il s'agit simplement de détecter si l'on est en présence de perturbation magnétiques ou pas, sans chercher à les corriger. Le caractère stationnaire est représentatif de la pertinence du modèle magnétique.

Cette étape (b) voit le calcul d'un paramètre (soit booléen, soit à valeur numérique discrète ou continue) représentatif du caractère stationnaire ou non du champ magnétique.

Dans un premier mode de réalisation, on peut directement obtenir une information booléenne, par exemple avec un capteur magnétique dédié présentant un seuil de sensibilité prédéterminé.

Dans un deuxième mode de réalisation, ledit paramètre représentatif du caractère stationnaire ou non est une quantité physique à valeur numérique (on peut par exemple calculer un ordre de grandeur de $\frac{\partial B}{\partial t}$, d'autre exemples préférés seront données plus loin), le cas échéant « traité » (dans l'étape (c) ou directement dans l'étape (b)) et en particulier comparé à un ou plusieurs seuils de référence. Par commodité, on parlera dans la présente description de paramètre « brut » et le cas échéant de paramètre « traité » si l'étape (b) comprend l'application d'une fonction quelconque tel qu'un seuillage sur la valeur du paramètre, mais on pourra les utiliser indifféremment dans l'étape (c). L'homme du métier comprendra que la présente invention n'est limité à aucun type de paramètre en particulier et aucune façon de le manipuler.

Plus précisément, s'il y a un unique seuil, on revient à un paramètre booléen : soit le champ magnétique est suffisamment stationnaire (le seuil n'est pas dépassé) pour que le modèle magnétique soit pertinent, soit il ne l'est pas suffisamment (le seuil est dépassé) et alors le modèle magnétique n'est plus pertinent. S'il y a plusieurs seuils, on obtient des valeurs discrètes, et le paramètre traité constitue une sorte de « niveau de stationnarité ». Par exemple on peut avoir $k$ seuils croissants (numérotés de 1 à k, $k \geq 2$), et *k+1* valeurs de paramètre traité :

- si la valeur du paramètre brut est en-dessous du premier seuil, le paramètre traité a pour valeur « *0* » (i.e. la stationnarité est maximale) ;
- si la valeur du paramètre brut est au-dessus du k-ième seuil, le paramètre traité a pour valeur « *k* » (i.e. la stationnarité est minimale - les perturbations sont maximales) ;
- de la valeur du paramètre brut est entre le i-ème seuil et le i+1-ième seuil $(i \in [\![1; k-1]\!])$, le paramètre traité a pour valeur « *i* » (i.e. la stationnarité est intermédiaire).

Au lieu d'avoir un paramètre à valeur dans $[\![0; k]\!]$, l'homme du métier pourra choisir n'importe quelle échelle de son choix, par exemple diviser la valeur ci-avant par k de sorte à ce que le paramètre traité soit un taux à valeur dans l'intervalle [0; 1].

On note qu'il n'y a pas forcément de seuillage, la valeur brute pouvant être utilisée telle quelle comme paramètre représentatif du caractère stationnaire ou non du champ magnétique. Comme expliqué avant on peut chercher directement à évaluer un ordre de grandeur de $\frac{\partial B}{\partial t}$, mais alternativement on peut chercher à détecter les conséquences d'une éventuelle non-stationnarité et ainsi chercher à identifier directement une perturbation du modèle via le calcul d'autres paramètres représentatifs du caractère stationnaire ou non du champ magnétique, dont on verra des exemples.

L'homme du métier saura réaliser une telle évaluation, mais on décrira plus loin des techniques très avantageuses dans le cadre de la présente invention.

De façon arbitraire (comme présenté ci-avant, et on verra que cela coïncide avec les exemples qui seront présentés), lorsque le paramètre est à valeur numérique, on peut décider que plus la valeur dudit paramètre est proche de zéro, plus le champ magnétique a un caractère stationnaire, mais on pourra tout à fait prévoir l'inverse.

Dans une étape (c), les moyens de traitement de données 21, 31, 41 estiment au moins une composante du mouvement de l'objet 1, en particulier toutes les composantes de la vitesse linéaire *V*. Une ou plusieurs composantes du vecteur vitesse angulaire $\Omega$ peuvent être également estimées ou du moins vérifiées. Alternativement, la ou les composantes estimées pourront être les composantes de la position, et/ou de l'orientation, selon les applications recherchées. De façon préférée, six composantes du mouvement seront estimées (en particulier les trois composantes de la position et les trois composantes de l'orientation).

Cette estimation est faite en utilisant :

◦ au moins une équation autre que magnétique (i.e. ne liant pas des composantes du champ magnétique ou d'une de ses dérivées) liant ladite composante du mouvement dudit objet 1 et l'au moins une information acquise représentative du mouvement de l'objet (c'est-à-dire en particulier au moins une équation inertielle liant ladite composante du mouvement dudit objet 1 et l'au moins une composante acquise d'une accélération et/ou d'une vitesse angulaire de l'objet 1) ;
◦ selon la valeur calculée du paramètre représentatif du caractère stationnaire ou non du champ magnétique au niveau des moyens de mesure magnétique 20, au moins une équation magnétique liant ladite composante du mouvement dudit objet 1 et l'au moins une composante acquise du champ magnétique et/ou d'une dérivée i-ième du champ magnétique.

Plus précisément, la contribution de la ou des équation(s) magnétique(s) est variable et est subordonnée à la pertinence du modèle magnétique : si le champ magnétique n'est pas évalué suffisamment stationnaire, la contribution de ces équations magnétiques sera diminuée voire supprimée pour conserver la pertinence du modèle global.

Si le paramètre représentatif du caractère stationnaire du champ magnétique calculé à l'étape (b) est booléen, la contribution est elle-même booléenne : soit le paramètre est représentatif d'un caractère stationnaire est on utilise les équations magnétiques, soit il est représentatif d'un caractère non-stationnaire et on ne les utilise pas.

Si le paramètre représentatif du caractère stationnaire du champ magnétique calculé à l'étape (b) est à valeur numérique, la contribution de l'au moins une équation magnétique sera fonction de (et éventuellement inversement proportionnelle à) la valeur de ce paramètre, c'est-à-dire que la contribution peut être variable selon le niveau de stationnarité, en particulier plus le paramètre est haut plus la contribution est faible. Par exemple, si l'on reprend l'exemple précédent on le paramètre présente $k$ valeurs qui sont des taux $t$ dans [0; 1], alors la contribution peut être donnée par la valeur (1-t) ; si t=0 (niveau de stationnarité maximal), les équations magnétiques sont utilisées à 100%, si t=1 (niveau de stationnarité minimal), les équations magnétiques sont utilisées à 0% (i.e. supprimées).

Par commodité, on parlera d'un premier système permettant de fournir une information de positionnement autre que magnétique (en particulier comme expliqué un premier système d'au moins une équation inertielle, mais on comprendra qu'on pourra utiliser d'autres équations complémentaires des équations magnétiques, par exemple des équations portant sur des images dans un cas de navigation visuelle), et d'un deuxième système d'au moins une équation magnétique. Par « système unifié » on entendra un système de toutes les équations des premier et deuxième systèmes.

On notera que les équations de chacun des systèmes soit impliquent directement la ou les composantes du mouvement recherchées, soit leurs dérivées (par exemple la vitesse angulaire si l'on cherche l'orientation).

En ce qui concerne le premier système, on a de manière générale un modèle dynamique d'une ou plusieurs équations de la forme : $\frac{dX}{dt} = f(X, mesures),$ où X représente une composante du mouvement (comme expliqué orientation, accélération, vitesse, position, etc.) et *mesures* représente les données acquises par les moyens de mesure inertielle 24.

Par exemple, on peut prendre le premier système $\begin{cases} \dot{R} = \Omega R \\ \dot{V} = -\Omega \wedge V + \gamma + R.g' \end{cases}$ où $R$ est l'orientation de l'objet 1.

En ce qui concerne le deuxième système, comme expliqué on peut prendre une ou plusieurs équations de la forme $\dot{\nabla}_n B = f_n(\Omega).\nabla_n B + g_n(\nabla_{n+1}B).V,$ et avantageusement l'équation $\dot{B} = -\Omega \wedge B + \nabla B.V$.

On notera qu'il est toujours possible de modéliser une partie des perturbations magnétiques dans le deuxième système comme évoqué précédemment (perturbations liées au réseau de distribution d'électricité, petites perturbations magnétiques sous la forme de dipôles magnétiques, etc.) de sorte à ce que la présence de ces perturbations « gérables » ne nécessite pas de diminuer ou supprimer la contribution des équations mathématiques, i.e. que seules les perturbations « non modélisables » entrainent l'évaluation du champ magnétique comme non stationnaire.

*Filtrage*

L'étape (c) peut de façon avantageuse être mise en œuvre via une stratégie de filtrage standard consistant à utiliser les données capteurs (moyens 20, 24) pour calculer un état estimé représentatif de l'état réel. Dans notre cas, l'état contient bien évidemment des informations de mouvement, les étapes de prédiction et de recalage sont des étapes classiques d'une implémentation de filtre qui utilisent les équations inertielles et les équations magnétiques, et les gains sont réglés pour que le filtre converge.

Pour cela, on peut utiliser tout observateur d'état (c'est-à-dire un filtre, en particulier un filtre estimateur d'état linéaire tel qu'un filtre Luenberger, un filtre de Kalman, etc., ou non-linéaire tel qu'un filtre de Kalman étendu, un observateur invariant, etc.). Dans la présente description, on prendra l'exemple du filtre de Kalman étendu (EKF, « extended Kalman filter »), mais l'homme du métier saura transposer à d'autres filtres.

Dans un filtre de Kalman étendu, l'état est représenté par un vecteur par exemple de dimension *n* qui comprend l'orientation et la position. Il est possible d'ajouter d'autres états à ce vecteur pour améliorer l'estimation, par exemple le biais des capteurs. Une matrice de covariance est utilisée pour estimer la covariance entre chaque état du filtre, elle est de dimension $n^2$. Le filtre de Kalman s'effectue en deux étapes, une étape de prédiction et une étape mise à jour. Lors de la mise à jour, gains sont alors réglés automatiquement en fonction des matrices de covariances, de dynamique et de mesure (alternativement, on peut construire un observateur non linéaire dont les gains sont réglés à la main).

La mise à jour de la matrice de covariance repose sur l'hypothèse que les erreurs dues aux capteurs et aux approximations sont modélisées par exemple comme un bruit de distribution gaussienne.

De façon préférée, l'étape (b) de calcul du paramètre représentatif du caractère stationnaire ou non du champ magnétique au niveau des moyens de mesure magnétique 20 est également obtenue par filtrage, généralement simultanément avec l'estimation du mouvement de l'objet 1 (i.e. les étapes (b) et (c) sont simultanées, et plus précisément mise en œuvre de façon concomitante sur la durée : le caractère stationnaire du champ magnétique est évalué sur la durée, ce qui permet de détecter aussi les apparitions de perturbations que leurs disparitions. On comprendra qu'alternativement des vérifications peuvent être faites périodiquement).

Pour cela l'étape (b) comprend de façon préférée le calcul de l'innovation d'un observateur d'état (à nouveau en particulier un filtre estimateur d'état linéaire tel qu'un filtre Luenberger, un filtre de Kalman, etc., ou non-linéaire tel qu'un filtre de Kalman étendu, un observateur invariant, etc.), ledit paramètre représentatif du caractère stationnaire ou non du champ magnétique au niveau des moyens de mesure magnétique 20 étant fonction de l'innovation. En effet, l'innovation d'une mesure dans un observateur d'état est représentative de la cohérence de cette mesure avec le modèle de filtrage. On peut donc l'utiliser pour détecter la présence de perturbations magnétiques et donc de non-stationnarité (qu'on peut traduire par le fait que l'équation magnétique n'est pas en accord avec les mesures magnétiques).

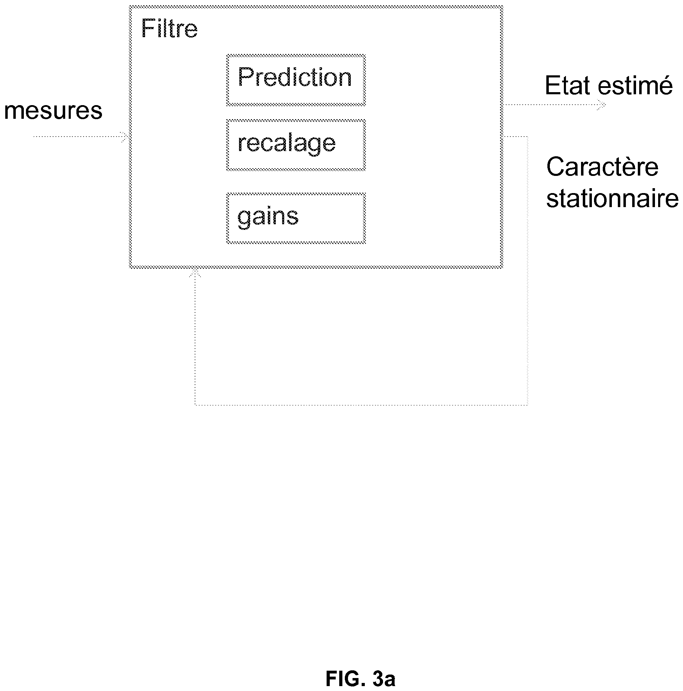

Selon un premier mode de réalisation, on utilise simplement l'observateur utilisé pour l'étape (c). En référence à la **figure 3a,** on a dans ce mode de réalisation un seul filtre avec deux sorties (l'état estimé et le paramètre représentatif du caractère stationnaire ou non du champ magnétique au niveau des moyens de mesure magnétique 20, basé sur l'innovation de l'observateur). C'est lors de l'étape de recalage que l'observateur fournit l'innovation.

Par exemple, si la covariance de l'innovation est estimée récursivement en utilisant un filtre passe bas : $\hat{S}[k]$ = (1 - $\alpha$)$\hat{S}[k$ - 1] + $a\tilde{y}[k]\tilde{y}[k]^T$, où $\tilde{y}[k]$ est le vecteur d'innovation à l'itération *k*(de sorte que $\tilde{y}[k]\tilde{y}[k]^T$ est la covariance de l'innovation) et *S[k]* est l'estimation filtrée de la covariance de l'innovation à l'itération *k*, et 0 < $\alpha$ < 1 est un paramètre de réglage de la fréquence de coupure du filtre.

La covariance de l'innovation théorique (dans le sens "attendu si le modèle de filtrage était parfait") est une sortie du filtrage de Kalman en temps discret : si l'on note *P[k|k* - 1] la covariance de l'erreur d'état prédite, *R[k]* la matrice de covariance de bruit de mesure et *H[k]* la matrice Jacobienne de la fonction de mesure par rapport à l'état, alors :

$$S[k] = R[k] + H[k]P[k|k-1]H[k]^T$$

En théorie, si le modèle était parfait, on aurait :

$$E\big[\text{trace}\big(\hat{S}[k]\big) - \text{trace}(S[k])\big] \approx 0$$

On peut utiliser trace ($\hat{S}[k]$) - trace(*S[k]*) ou toute autre fonction paramétrique de *S[k]* ou de sa séquence comme paramètre représentatif du caractère stationnaire ou non du champ magnétique ($\hat{S}[k]$, une sous-matrice de *S[k],* sa trace ou la distance entre ces valeurs et celles issues de *S[k]* notamment.)

A noter qu'on peut dans tous les cas utiliser un simple filtrage passe-bas en temps de l'innovation $\tilde{S}[k]$ pour caractériser le caractère stationnaire ou non du champ magnétique.

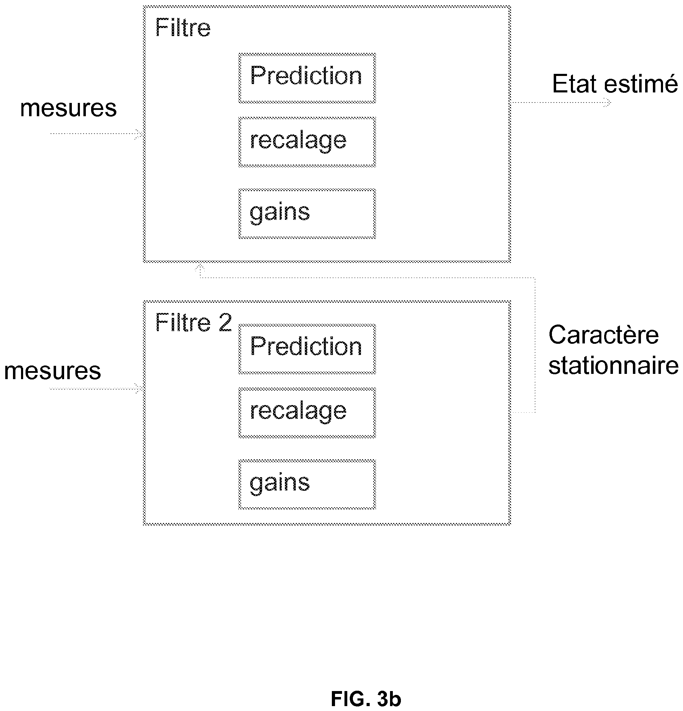

Selon un deuxième mode de réalisation l'étape (b) comprend l'utilisation d'un observateur d'état dédié. On peut en effet construire un observateur d'état basé sur les mêmes équations ou une petite partie des mêmes équations ayant pour unique but de calculer une information de pertinence du modèle magnétique. On peut ainsi reprendre par exemple le filtre présenté dans le document « Combining Inertial Measurements and Distributed Magnetometry for Motion Estimation », Eric Dorveaux, Thomas Boudot, Mathieu Hillion, Nicolas Petit, 2011 American Control Conférence on O'Farrell Street, San Francisco, CA, USA (qui ne contient qu'une partie des équations inertielles), ou un filtre plus complet. Cet observateur d'état fait l'hypothèse de la stationnarité du champ magnétique, et on utilise à nouveau l'innovation de cet observateur d'état pour évaluer cette hypothèse et en déduire la pertinence du modèle magnétique (voir **figure 3b**).

*Contribution du modèle magnétique*

Une fois que le caractère stationnaire ou non du champ magnétique a été évalué (i.e. la pertinence du modèle magnétique a été quantifiée), on peut modifier l'impact du deuxième système (d'équations magnétiques) dans l'observateur d'état de manière à réduire l'impact des perturbations magnétiques. Une pluralité de modes de réalisation est possible.

Selon un premier mode de réalisation assez radical évoqué ci-avant, l'utilisation du deuxième système d'équations est complètement supprimée (i.e. le système unifié se réduit au premier système) pour le temps de la perturbation, pour annuler son l’impact. Pour cela, il suffit de ne plus utiliser ces équations magnétiques à l'étape (c) si le paramètre représentatif du caractère stationnaire du champ magnétique est caractéristique d'une non-stationnarité (i.e. valeur au-dessus d'un seuil prédéterminé).

Alternativement, selon un deuxième mode de réalisation, on adapte le gain de l'observateur d'état qui réalise l'estimation du mouvement à l'étape (c). Par exemple, si l'observateur d'état est un filtre de Kalman linéaire ou un filtre de Kalman étendu dont l'état contient le champ magnétique B, cela passe par une modification de la matrice de bruit de dynamique de l'équation magnétique.

Si on utilise trace($\hat{S}[k]$) - trace($S[k]$) comme paramètre représentatif du caractère stationnaire ou non du champ magnétique, on peut ajouter à la covariance de dynamique habituelle un terme $p[k]$ évoluant avec la dynamique suivante :

$$p[k+1] = \max\left(p_0, p[k] + \lambda\left(\text{trace}(\hat{S}[k]) - \text{trace}(S[k])\right)\right), \text{ où } \lambda > 0.$$

Des hautes valeurs de $p_0$ impliquent des hautes valeurs de $S[k]$, c'est-à-dire que le paramètre de réglage n'est changé que lorsque trace($\hat{S}[k]$) atteint un certain seuil. Cette approche évite d'agir sur tout le modèle.

Un troisième mode de réalisation consiste à rendre le gain de recalage K lié aux équations magnétiques provenant d'un filtre de Kalman (ou d'un filtre linéaire quelconque) inversement proportionnel au paramètre représentatif du caractère stationnaire on non du champ magnétique. Plus le modèle est pertinent (i.e. plus le paramètre représentatif du caractère stationnaire du champ magnétique est proche de zéro), plus fort est le gain de recalage.

*Equipements et système*

Selon un deuxième aspect, l'invention concerne en particulier les équipements 2, 3, 4 pour la mise en œuvre de l'un ou l'autre des modes de réalisation du procédé.

Comme expliqué précédemment, selon un premier mode de réalisation l'équipement est un boitier 2 autonome comprenant les moyens de mesure magnétique 20, les moyens de mesure autre que magnétique (inertielle) 24, et les moyens de traitement de données 21 configurés pour la mise en œuvre des étapes du procédé.

Le boitier 2 comprend en outre des moyens d'attache 23 du boitier 2, et le cas échéant des moyens de stockage de données 22 (pour le stockage par exemple des mouvements estimés) et/ou des moyens de communication 25 pour l'exportation des résultats.

Selon un deuxième mode de réalisation, l'équipement est un terminal mobile 3 ou un serveur 4, adapté pour communiquer avec un boitier 2 comprenant les moyens de mesure magnétique et non-magnétique 20, 24. En d'autres termes, le terminal 3 ou le serveur 4 comprend les moyens de traitement 31 ou 41 configurés pour la mise en œuvre des étapes du procédé. Chaque boitier 2 peut tout de même comprendre des moyens de traitement de données 21 pour le contrôle des moyens 20, 24 et la transmission (via des moyens de communication 25) des données mesurées aux moyens de traitement de données 31, 41.

Il est à noter que les moyens 21, 31, 41 peuvent le cas échéant se partager des étapes du procédé.

L'invention concerne dans ce cas également le système comprenant l'équipement 3, 4 selon ce mode de réalisation et le ou les boitiers 2 « satellites » en connexion

Dans tous les cas, les moyens de traitement de données 21, 31, 41 de l'équipement 2, 3, 4 « principal » sont configurés pour mettre en œuvre :

- Un module de réception :

  ○ d'au moins une composante du champ magnétique et/ou d'une dérivée i-ième du champ magnétique (avantageusement au moins cinq), acquise par des moyens de mesure magnétique 20 solidaires dudit objet 1,
  ○ d'au moins une composante information représentative du mouvement de l'objet 1, c'est-à-dire préférentiellement d'au moins une composante d'une accélération et/ou d'une vitesse angulaire de l'objet 1 (avantageusement trois composantes de l'accélération et trois composantes de la vitesse), acquise par des moyens de mesure autre que magnétique (inertielle) 24 solidaires dudit objet 1,

- un module de calcul d'un paramètre représentatif du caractère stationnaire ou non du champ magnétique au niveau des moyens de mesure magnétique 20, calculant typiquement comme expliqué la valeur d'un paramètre représentatif du caractère stationnaire ou non du champ magnétique au niveau des moyens de mesure magnétique 20 ;
- un module d'estimation d'au moins une composante (avantageusement trois voire six) du mouvement dudit objet 1 en utilisant,

  ◦ au moins une équation autre que magnétique liant ladite composante du mouvement dudit objet 1 et l'au moins une information acquise représentative du mouvement de l'objet 1 (en particulier une équation inertielle liant ladite composante du mouvement dudit objet 1 et l'au moins une composante acquise d'une accélération et/ou d'une vitesse angulaire de l'objet 1) ;
  ◦ selon la valeur calculée dudit paramètre représentatif du caractère stationnaire ou non du champ magnétique au niveau des moyens de mesure magnétique 20, au moins une équation magnétique liant ladite composante du mouvement dudit objet 1 et l'au moins une composante acquise du champ magnétique et/ou d'une dérivée i-ième du champ magnétique.

*Produit programme d'ordinateur*

Selon un troisième et un quatrième aspects, l'invention concerne un produit programme d'ordinateur comprenant des instructions de code pour l'exécution (sur les moyens de traitement 21, 31, 41) d'un procédé d'estimation du mouvement d'un objet 1 évoluant dans un champ magnétique ambiant selon le premier aspect de l'invention, ainsi que des moyens de stockage lisibles par un équipement informatique (par exemple des moyens de stockage de données 22) sur lequel on trouve ce produit programme d'ordinateur.

**Revendications**

1. Procédé d'estimation du mouvement d'un objet (1) évoluant dans un champ magnétique ambiant, le procédé étant **caractérisé en ce qu'**il comprend des étapes de :

   (a) Acquisition :

   ◦ par des moyens de mesure magnétique (20) solidaires dudit objet (1), d'au moins une composante du champ magnétique et/ou d'une dérivée i-ième du champ magnétique, au niveau des moyens de mesure magnétique (20) ;
   ◦ par des moyens de mesure autre que magnétique (24) solidaires dudit objet (1), d'au moins une information représentative du mouvement de l'objet (1) ;

   (b) Calcul par des moyens de traitement de données (21, 31, 41) d'un paramètre représentatif du caractère stationnaire ou non du champ magnétique au niveau des moyens de mesure magnétique (20) ;
   (c) Estimation par les moyens de traitement de données (21, 31, 41) d'au moins une composante du mouvement dudit objet (1) en utilisant,

   ◦ au moins une équation autre que magnétique liant ladite composante du mouvement dudit objet (1) et l'au moins une information acquise représentative du mouvement de l'objet (1) ;
   ◦ selon la valeur calculée du paramètre représentatif du caractère stationnaire ou non du champ magnétique au niveau des moyens de mesure magnétique (20), au moins une équation magnétique liant ladite composante du mouvement dudit objet (1) et l'au moins une composante acquise du champ magnétique et/ou d'une dérivée i-ième du champ magnétique.

2. Procédé selon la revendication 1, dans lequel les moyens de mesure magnétique (20) comprennent une pluralité de gradiomètres et/ou magnétomètres organisés en triaxes, chaque triaxe étant associé à une position spatiale.

3. Procédé selon l'une des revendications 1 et 2, dans lequel la ou les équations magnétiques sont de la forme

$$\dot{\nabla_n B} = f_n(\Omega).\nabla_n B + g_n(\nabla_{n+1} B).V,$$ où $\nabla_n B$ est une dérivée n-ième du champ magnétique, $\Omega$ la vitesse

angulaire instantanée, $V$ la vitesse linéaire instantanée, et $f_n$ et $g_n$ des fonctions prédéterminées.

4. Procédé selon la revendication 3, dans lequel l'équation magnétique *est* $\dot{B} = -\Omega \times B + VB \cdot V$.

5. Procédé selon l'une des revendications 1 à 4, dans lequel :

 - lesdits moyens de mesure autre que magnétique (24) sont des moyens de mesure inertielle, de sorte que ladite information acquise représentative du mouvement de l'objet (1) est au moins une composante d'une accélération et/ou d'une vitesse angulaire de l'objet (1)
 - ladite au moins une équation autre que magnétique est une équation inertielle liant ladite composante du mouvement dudit objet (1) et l'au moins une composante acquise d'une accélération et/ou d'une vitesse angulaire de l'objet (1).

6. Procédé selon la revendication 5, dans lequel l'étape (a) comprend l'acquisition par les moyens de mesure inertielle (24) de trois composantes de l'accélération de l'objet (1) et trois composantes de la vitesse angulaire de l'objet (1).

7. Procédé selon l'une des revendications 1 à 6, dans lequel ledit paramètre représentatif du caractère stationnaire ou non du champ magnétique au niveau des moyens de mesure magnétique (20) est à valeur numérique, l'au moins une équation magnétique présentant une contribution variable dans l'étape (c) en fonction de la valeur calculée dudit paramètre représentatif du caractère stationnaire ou non du champ magnétique au niveau des moyens de mesure magnétique (20).

8. Procédé selon la revendication 7, dans lequel l'étape (b) comprend le calcul de l'innovation d'un observateur d'état, ledit paramètre représentatif du caractère stationnaire ou non du champ magnétique au niveau des moyens de mesure magnétique (20) étant fonction de ladite innovation.

9. Procédé selon la revendication 8, dans lequel ledit paramètre représentatif du caractère stationnaire ou non du champ magnétique au niveau des moyens de mesure magnétique (20) est la différence entre la trace de la matrice théorique de la covariance de l'innovation, et la trace de la matrice estimée de la covariance de l'innovation.

10. Procédé selon l'une des revendications 7 à 9, dans lequel l'étape (c) comprend la mise en œuvre d'un observateur d'état pour estimer un état comprenant ladite au moins une composante du mouvement dudit objet (1), la contribution de ladite au moins une équation magnétique étant contrôlée via un gain dudit observateur d'état.

11. Procédé selon les revendications 8 et 10 en combinaison, dans lequel l'observateur d'état mis en œuvre à l'étape (c) est l'observateur d'état utilisé à l'étape (b).

12. Equipement (2, 3, 4) d'estimation du mouvement d'un objet (1) évoluant dans un champ magnétique ambiant, **caractérisé en ce qu'**il comprend des moyens de traitement de données (21, 31, 41) configurés pour mettre en oeuvre :

 - Un module de réception :

 ◦ d'au moins une composante du champ magnétique et/ou d'une dérivée i-ième du champ magnétique, acquise par des moyens de mesure magnétique (20) solidaires dudit objet (1),
 ◦ d'au moins une composante information représentative du mouvement de l'objet (1), acquise par des moyens de mesure autre que magnétique (24) solidaires dudit objet (1),

 - un module de calcul d'un paramètre représentatif du caractère stationnaire ou non du champ magnétique au niveau des moyens de mesure magnétique (20) ;
 - un module d'estimation d'au moins une composante du mouvement dudit objet (1) en utilisant,

 ◦ au moins une équation autre que magnétique liant ladite composante du mouvement dudit objet (1) et l'au moins une information acquise représentative du mouvement de l'objet (1) ;
 ◦ selon la valeur calculée du paramètre représentatif du caractère stationnaire ou non du champ magnétique au niveau des moyens de mesure magnétique (20), au moins une équation magnétique liant ladite composante du mouvement dudit objet (1) et l'au moins une composante acquise du champ magnétique et/ou d'une dérivée i-ième du champ magnétique.

**13.** Equipement selon la revendication 12, étant un boitier (2) comprenant les moyens de mesure magnétique (20) et les moyens de mesure autre que magnétique (24).

**14.** Produit programme d'ordinateur comprenant des instructions de code pour l'exécution d'un procédé d'estimation du mouvement d'un objet (1) évoluant dans un champ magnétique ambiant selon l'une des revendications 1 à 11, lorsque ledit programme est exécuté sur un ordinateur.

**15.** Moyen de stockage lisible par un équipement informatique sur lequel un produit programme d'ordinateur comprend des instructions de code pour l'exécution d'un procédé d'estimation du mouvement d'un objet (1) évoluant dans un champ magnétique ambiant selon l'une des revendications 1 à 11.

**Patentansprüche**

**1.** Verfahren zur Schätzung der Bewegung eines sich in einem umgebenden Magnetfeld bewegenden Objekts (1), wobei das Verfahren **dadurch gekennzeichnet ist, dass** es Schritte umfasst:

(a) Erfassen:

◦ durch fest mit dem Objekt (1) verbundene Magnetmessmittel (20) mindestens einer Komponente des Magnetfelds und/oder einer i-ten Ableitung des Magnetfelds im Bereich der Magnetmessmittel (20);
◦ durch andere als magnetische Messmittel (24), die mit dem Objekt (1) fest verbunden sind, mindestens einer für die Bewegung des Objekts (1) repräsentative Information;

(b) Berechnen, durch Datenverarbeitungsmittel (21, 31, 41), eines Parameters, der für den stationären oder nicht stationären Charakter des Magnetfelds im Bereich der Magnetmessmittel (20) repräsentativ ist;
(c) Schätzen, durch die Datenverarbeitungsmittel (21, 31, 41), mindestens einer Komponente der Bewegung des Objekts (1) bei Verwendung

◦ mindestens einer anderen als eine magnetische Gleichung, die die Komponente der Bewegung des Objekts (1) und die mindestens eine erfasste Information, die für die Bewegung des Objekts (1) repräsentativ ist, verbindet;
◦ je nach berechnetem Wert des für den stationären oder nicht stationären Charakter des Magnetfelds im Bereich der Magnetmessmittel (20) repräsentativen Parameters, mindestens einer Magnetgleichung, die die Komponente der Bewegung des Objekts (1) und die mindestens eine erfasste Komponente des Magnetfelds und/oder einer i-ten Ableitung des Magnetfelds verbindet.

**2.** Verfahren nach Anspruch 1, wobei die Magnetmessmittel (20) eine Vielzahl von Gradiometern und/oder Magnetometern umfassen, die in Triaxen organisiert sind, wobei jede Triaxe einer räumlichen Position zugeordnet ist.

**3.** Verfahren nach einem der Ansprüche 1 und 2, wobei die Magnetgleichung(en) in der Form

$$\dot{\nabla_n} B = f_n(\Omega).\nabla_n B + g_n(\nabla_{n+1}B).V$$

vorliegen, wobei $\nabla_n B$ eine n-te Ableitung des Magnetfelds ist, $\Omega$ die momentane Winkelgeschwindigkeit ist, $V$ die momentane lineare Geschwindigkeit ist und $f_n$ und $g_n$ vorher festgelegte Funktionen sind.

**4.** Verfahren nach Anspruch 3, wobei die Magnetgleichung $\dot{B} = -\Omega \times B + \nabla B \cdot V$ ist.

**5.** Verfahren nach einem der Ansprüche 1 bis 4, wobei:

- die Messmittel, die andere als Magnetmessmittel (24) sind, Trägheitsmessmittel sind, so dass die erfasste, für die Bewegung des Objekts (1) repräsentative Information mindestens eine Komponente einer Beschleunigung und/oder einer Winkelgeschwindigkeit des Objekts (1) ist,
- die mindestens eine Gleichung, die eine andere als eine Magnetgleichung ist, eine Trägheitsgleichung ist, die die Komponente der Bewegung des Objekts (1) und die mindestens eine erfasste Komponente einer Beschleunigung und/oder einer Winkelgeschwindigkeit des Objekts (1) verbindet.

6. Verfahren nach Anspruch 5, wobei Schritt (a) die Erfassung, durch die Trägheitsmessmittel (24), von drei Komponenten der Beschleunigung des Objekts (1) und drei Komponenten der Winkelgeschwindigkeit des Objekts (1) umfasst.

7. Verfahren nach einem der Ansprüche 1 bis 6, wobei der für den stationären oder nicht stationären Charakter des Magnetfelds im Bereich der Magnetmessmittel (20) repräsentative Parameter der numerische Wert ist, wobei die mindestens eine Magnetgleichung einen variablen Beitrag in Schritt (c) in Abhängigkeit von dem berechneten Wert des für den stationären oder nicht stationären Charakter des Magnetfelds im Bereich der Magnetmessmittel (20) repräsentativen Parameters darstellt.

8. Verfahren nach Anspruch 7, wobei Schritt (b) die Berechnung der Innovation eines Zustandsbeobachters umfasst, wobei der für den stationären oder nicht stationären Charakter des Magnetfelds im Bereich der Magnetmessmittel (20) repräsentative Parameter von der Innovation abhängt.

9. Verfahren nach Anspruch 8, wobei der für den stationären oder nicht stationären Charakter des Magnetfelds im Bereich der Magnetmessmittel (20) repräsentative Parameter die Differenz zwischen der Spur der theoretischen Matrix der Kovarianz der Innovation und der Spur der geschätzten Matrix der Kovarianz der Innovation ist.

10. Verfahren nach einem der Ansprüche 7 bis 9, wobei Schritt (c) die Implementierung eines Zustandsbeobachters umfasst, um einen Zustand zu schätzen, der die mindestens eine Komponente der Bewegung des Objekts (1) umfasst, wobei der Beitrag der mindestens einen Magnetgleichung über eine Verstärkung des Zustandsbeobachters überprüft wird.

11. Verfahren nach den Ansprüchen 8 und 10 in Kombination, wobei der in Schritt (c) implementierte Zustandsbeobachter der in Schritt (b) verwendet Zustandsbeobachter ist.

12. Ausrüstung (2, 3, 4) zur Schätzung der Bewegung eines Objekts (1), das sich in einem umgebenden Magnetfeld bewegt, **dadurch gekennzeichnet, dass** sie Datenverarbeitungsmittel (21, 31, 41) umfasst, die ausgelegt sind, um zu implementieren:

  - ein Empfangsmodul:

    ◦ mindestens einer Komponente des Magnetfelds und/oder einer i-ten Ableitung des Magnetfelds, die von mit dem Objekt (1) fest verbundenen Magnetmessmitteln (20) erfasst wird,
    ◦ mindestens einer Komponente einer Information, die für die Bewegung des Objekts (1) repräsentativ ist, die von anderen als magnetischen Messmitteln (24) erfasst wird, die mit dem Objekt (1) fest verbunden sind,

  - ein Modul zur Berechnung eines Parameters, der für den stationären oder nicht stationären Charakter des Magnetfelds im Bereich der Magnetmessmittel (20) repräsentativ ist;
  - ein Modul zum Schätzen mindestens einer Komponente der Bewegung des Objekts (1) bei Verwendung

    ◦ mindestens einer anderen als eine magnetische Gleichung, die die Komponente der Bewegung des Objekts (1) und die mindestens eine erfasste Information, die für die Bewegung des Objekts (1) repräsentativ ist, verbindet;
    ◦ je nach berechnetem Wert des für den stationären oder nicht stationären Charakter des Magnetfelds im Bereich der Magnetmessmittel (20) repräsentativen Parameters, mindestens einer Magnetgleichung, die die Komponente der Bewegung des Objekts (1) und die mindestens eine erfasste Komponente des Magnetfelds und/oder einer i-ten Ableitung des Magnetfelds verbindet.

13. Ausrüstung nach Anspruch 12, die ein Gehäuse (2) ist, welches die Magnetmessmittel (20) und die Messmittel (24) umfasst, die nicht magnetisch sind.

14. Rechnerprogrammprodukt, umfassend Codebefehle für die Ausführung eines Verfahrens zum Schätzen der Bewegung eines Objekts (1), das sich in einem umgebenden Magnetfeld bewegt, nach einem der Ansprüche 1 bis 11, wenn das Programm auf einem Rechner ausgeführt wird.

15. Speichermittel, das von einer IT-Ausrüstung lesbar ist, auf dem ein Rechnerprogrammprodukt Codebefehle zur Ausführung eines Verfahrens zum Schätzen der Bewegung eines Objekts (1) umfasst, das sich in einem umgebenden Magnetfeld bewegt, nach einem der Ansprüche 1 bis 11.

**Claims**

1. Method for estimating the movement of an object (1) moving in an ambient magnetic field, the method being **characterised in that** it comprises steps of:

    (a) acquiring:

        ◦ by magnetic measurement means (20) fixed with respect to said object (1), at least one component of the magnetic field and/or an i-th derivative of the magnetic field, at the magnetic measurement means (20);
        ◦ by non-magnetic measurement means (24) fixed with respect to said object (1), at least one item of information representative of the movement of the object (1);

    (b) calculating, by data processing means (21, 31, 41), a parameter representative of the stationary or otherwise character of the magnetic field at the magnetic measurement means (20);
    (c) estimating, by the data processing means (21, 31, 41), at least one component of the movement of said object (1) using,

        ◦ at least one non-magnetic equation linking said component of the movement of said object (1) and the at least one acquired item of information representative of the movement of the object (1);
        ◦ according to the calculated value of the parameter representative of the stationary or otherwise character of the magnetic field at the magnetic measurement means (20), at least one magnetic equation linking said component of the movement of said object (1) and the at least one acquired component of the magnetic field and/or an i-th derivative of the magnetic field.

2. Method according to claim 1, wherein the magnetic measurement means (20) comprise a plurality of gradiometers and/or magnetometers organised into triaxes, each triaxis being associated with a spatial position.

3. Method according to any of claims 1 or 2, wherein the magnetic equation(s) is/are of the form

$$\dot{\nabla_{n}}B = f_n(\Omega).\nabla_n B + g_n(\nabla_{n+1}B).V,$$ where $\nabla_n B$ is an n-th derivative of the magnetic field, $\Omega$ the instantaneous angular velocity, $V$ the instantaneous linear velocity, and $f_n$ and $g_n$ are predetermined functions.

4. Method according to claim 3, wherein the magnetic equation is $\dot{B} = -\Omega \times B + \nabla B \cdot V.$

5. Method according any of claims 1 to 4, wherein:

    - said non-magnetic measurement means (24) are inertial measurement means, such that said acquired item of information representative of the movement of the object (1) is at least one component of an acceleration and/or an angular velocity of the object (1);
    - said at least one non-magnetic equation is an inertial equation linking said component of the movement of said object (1) and the at least one acquired component of an acceleration and/or an angular velocity of the object (1).

6. Method according to claim 5, wherein step (a) comprises the acquisition, by the inertial measurement means (24), of three components of the acceleration of the object (1) and three components of the angular velocity of the object (1).

7. Method according to any of claims 1 to 6, wherein said parameter representative of the stationary or otherwise character of the magnetic field at the magnetic measurement means (20) is a numerical value, the at least one magnetic equation having a variable contribution in step (c) as a function of the calculated value of said parameter representative of the stationary or otherwise character of the magnetic field at the magnetic measurement means (20).

8. Method according to claim 7, wherein step (b) comprises calculating the innovation of a state observer, said parameter representative of the stationary or otherwise character of the magnetic field at the magnetic measurement means (20) being a function of said innovation.

9. Method according to claim 8, wherein said parameter representative of the stationary or otherwise character of the magnetic field at the magnetic measurement means (20) is the difference between the theoretical trace of the covariance matrix of the innovation, and the estimated trace of the covariance matrix of the innovation.

10. Method according to any of claims 7 to 9, wherein step (c) comprised the implementation of a state observer for estimating a state comprising said at least one component of the movement of said object (1), the contribution of said at least one magnetic equation being controlled via a gain of said state observer.

11. Method according to claims 8 and 10 in combination, wherein the state observer implemented at step (c) is the state observer used in step (b).

12. Equipment (2, 3, 4) for estimating the movement of an object (1) moving in an ambient magnetic field, **characterised in that** it comprises data processing means (21, 31, 41) configured to implement:

     - a module for receiving:

         ◦ at least one component of the magnetic field and/or an i-th derivative of the magnetic field, acquired by magnetic measurement means (20) fixed with respect to said object (1),
         ◦ at least one information component representative of the movement of the object (1), acquired by the non-magnetic measurement means (24) fixed with respect to said object (1),

     - a module for calculating a parameter representative of the stationary or otherwise character of the magnetic field at the magnetic measurement means (20);
     - a module for estimating at least one component of the movement of said object (1) using,

         ◦ at least one non-magnetic equation linking said component of the movement of said object (1) and the at least one acquired item of information representative of the movement of the object (1);
         ◦ according to the calculated value of the parameter representative of the stationary or otherwise character of the magnetic field at the magnetic measurement means (20), at least one magnetic equation linking said component of the movement of said object (1) and the at least one acquired component of the magnetic field and/or an i-th derivative of the magnetic field.

13. Equipment according to claim 12, being a case (2) comprising the magnetic measurement means (20) and the non-magnetic measurement means (24).

14. Computer program product comprising code instructions for the execution of a method for estimating the movement of an object (1) moving in an ambient magnetic field according to any of claims 1 to 11, when said program is executed on a computer.

15. Storage medium readable by computer equipment on which a computer program product comprises code instructions for the execution of a method for estimating the movement of an object (1) moving in an ambient magnetic field according to any of claims 1 to 11.

**FIG. 1**

FIG. 2

mesures

**Filtre**

Prediction

recalage

gains

Etat estimé

Caractère
stationnaire

**FIG. 3a**

Filtre

Prediction

recalage

gains

mesures

Etat estimé

Filtre 2

Prediction

recalage

gains

mesures

Caractère
stationnaire

**FIG. 3b**

## RÉFÉRENCES CITÉES DANS LA DESCRIPTION

**Documents brevets cités dans la description**

- FR 2914739
- US 2013218451 A1
- FR 1756675

**Littérature non-brevet citée dans la description**

- Navigation Magnéto-Inertielle - Principes et application à un système podométrique indoor. **ÉRIC DORVEAUX.** thèse. l'Ecole Nationale Supérieure des Mines de Paris, 10 Novembre 2011
- **CHARLES-IVAN CHESNEAU.** Motion estimation of a rigid body with an EKF using magneto-inertial measurements. *Indoor Positioning and Indoor Navigation (IPIN), 2016 International Conférence on Indoor Positioning and Indoor Navigation*
- **JOUY et al.** Compensation Method of Small Magnetic Perturbation in Heading by Gradient Measurement in a Magnetic Compass. *Accepted to appear in European Magnetic Sensors and ActuatorsConference,* 2017
- **ERIC DORVEAUX ; THOMAS BOUDOT ; MATHIEU HILLION ; NICOLAS PETIT.** Combining Inertial Measurements and Distributed Magnetometry for Motion Estimation. *American Control Conférence on O'Farrell Street,* 2011